Europäisches Patentamt

European Patent Office

Office européen des brevets

(19)

(11) Veröffentlichungsnummer : **0 012 794**
**B1**

(12) **EUROPÄISCHE PATENTSCHRIFT**

(45) Veröffentlichungstag der Patentschrift :
26.01.83

(21) Anmeldenummer : 79103105.7

(22) Anmeldetag : 23.08.79

(51) Int. Cl.³ : **G 06 F 11/08**, G 06 F 11/28,
G 06 F 11/10

(54) **Verfahren und Einrichtung für eine elektronische Datenverarbeitungsanlage zur Prüfung der aus einer Instruktion abgeleiteten Steuersignale.**

(30) Priorität : 22.12.78 DE 2855865

(43) Veröffentlichungstag der Anmeldung :
09.07.80 Patentblatt 80/14

(45) Bekanntmachung des Hinweises auf die Patenterteilung : 26.01.83 Patentblatt 83/04

(84) Benannte Vertragsstaaten :
DE FR GB

(56) Entgegenhaltungen :
GB A 1 324 250
US A 3 579 185
US A 4 108 359

IBM TECHNICAL DISCLOSURE BULLETIN, Band 5, Nr. 7, Dezember 1962, Seiten 39, 40. New York, US WOLFF : « Error detection for computer instruction performance ».
PROCEEDINGS OF THE INTERNATIONAL FEDERATION FOR INFORMATION PROCESSING CONGRESS, 5-10 August 1974, Seiten 108-111, Amsterdam, NL WAKERLY : « Design of low-cost general-purpose self-diagnosing computers ».

(73) Patentinhaber : **International Business Machines Corporation**

**Armonk, N.Y. 10504 (US)**

(72) Erfinder : **Blum, Arnold**
**Finkenweg 16**
**D-7261 Gechingen (DE)**

(74) Vertreter : **Jost, Ottokarl, Dipl.-Ing.**
**Schönaicher Strasse 220**
**D-7030 Böblingen (DE)**

Verfahren und Einrichtung für eine elektronische Datenverarbeitungsanlage zur Prüfung der aus einer Instruktion abgeleiteten Steuersignale

Die Erfindung betrifft ein Verfahren und eine Einrichtung für eine elektronische Datenverarbeitungsanlage zur Prüfung der aus einer Instruktion abgeleiteten Steuersignale nach dem Oberbegriff des Anspruchs 1.

Bei der Prüfung der Operationssteuerwerke von elektronischen Datenverarbeitungsanlagen, die beispielsweise aus dem Operationscodefeld einer Instruktion Steuersignale für die Ausführung von Elementaroperationen erzeugen, besteht immer wieder das Problem, die korrekte Erzeugung dieser Steuersignale und auch deren korrekte Übertragung zu den Orten ihres Wirksamwerdens möglichst genau und umfassend auf Fehlerfreiheit zu überprüfen.

Die bisher bekannt gewordenen Lösungen (vgl. IEEE « Transaction on Computers », Band C-19, Nr. 12, Dezember 1970, Seiten 1 153 bis 1 159) verwenden ein Paritätsbit, das aus den korrekt abgeleiteten Operationssteuersignalen einer Instruktion gebildet wird. Dieses Paritätsbit kennzeichnet daher korrekt abgeleitete Operationssteuersignale der zugehörigen Instruktion, wird in jeder Instruktion mitgeführt und mit dem am Ausgang des Operationsdecodierers aus den dort auftretenden Operationssteuersignalen der decodierten Instruktion gebildeten Paritätsbit verglichen. Abweichungen zwischen dem in der Instruktion mitgeführten und dem am Ausgang des Operationsdecodierers erneut aus den Operationssteuersignalen gebildeten Paritätsbit dienen als Fehleranzeige, die für die Einleitung von diagnostischen Maßnahmen verwendet werden kann.

In der US-PS 4 108 359 ist eine Einrichtung zur Überprüfung der richtigen Sequenz einer Instruktionsfolge beschrieben, bei der die richtige Reihenfolge der Ausführung von Instruktionen für frei wählbare Abschnitte eines Programms überprüfbar ist. Hierzu werden die Bits, aus denen eine Instruktion besteht, parallel in die Stufen eines Schieberegisters eingelesen, das über mehr Stufen verfügt, als für das parallele Einlesen der Bits erforderlich sind. Auf ein Taktsignal hin werden die in den einzelnen Stufen des Schieberegisters gespeicherten Bits der Instruktion verschoben, und danach werden die Bits der nachfolgenden Instruktion eingelesen. Beim nächsten Taktimpuls wiederholt sich dieses Spiel erneut. Beim Verschieben der in den Stufen befindlichen Bits wird jeweils eine Modulo 2 Addition der neu eintreffenden Bits der nächsten Instruktion mit den in der Stufe bereits gespeicherten Bits vorgenommen, so daß die Modulo 2 addition in die jeweils nächste Stufe gelangt. Da hier nur die Bits, aus denen eine Instruktion besteht, für die Prüfung herangezogen werden und nicht die sich aus der Dekodierung dieser Bits ergebenden Steuersignale, kann auf diese Weise nur die richtige Reihenfolge der Ausführung der Instruktionen eines bestimmten Programmabschnittes überprüft werden.

Da die Operationssteuersignale einer Instruktion aber mit den Instruktionszykluszeiten dieser Instruktion verknüpft sind, ist es für eine umfassende Prüfung dieser Steuersignale bedeutsam, nicht nur das generelle Vorliegen dieser Steuersignale zu prüfen, sondern auch deren Zeitbezogenheit und korrekte Übertragung zu den Orten ihres jeweiligen Wirksamwerdens, d.h. zu den verschiedenen Steuertoren des Datenflusses der Datenverarbeitungsanlage.

Im IBM Technical Disclosure Bulletin, Vol. 5, No. 7, Dez. 1962, Seite 39 und 40 ist eine Fehlererkennungseinrichtung für die Ausführung von Computerinstruktionen beschrieben, in welcher eine Verknüpfung der aus den Instruktionen abgeleiteten Steuersignale mit Zeittaktimpulsen vorgenommen wird.

Da die hier beschriebene Lösung keine Akkumulation von Teilprüfwerten für die Erzeugung des endgültigen Prüfwertes vornimmt, können nicht alle Gesamtzustände der Steuersignale über alle Steuerleitungen am Ausgang des Decodierers in Abhängigkeit von ihrem zeitgerechten Auftreten festgestellt werden. Hieraus ergeben sich jedoch Unsicherheiten bei der Fehlerüberwachung von Steuerwerken in elektronischen Daten, die oft nicht toleriert werden können. Außerdem ist diese bekannte Lösung sehr aufwendig, da für jede Steuerleitung bistabile Schaltelemente zur Zwischenspeicherung des Zustandes der zugeordneten Steuerleitung erforderlich sind.

Die Erfindung hat sich daher die Aufgabe gestellt, mit einfachen technischen Mitteln eine umfassende Prüfung von Steuerwerken elektronischer Datenverarbeitungsanlagen zu ermöglichen. Hierzu gehört sowohl die Prüfung der Zeitbezogenheit der Operationssteuersignale als auch deren korrekte Übertragung zu den Steuerelementen des Datenflusses, an denen diese Signale wirksam werden sollen. Dieses soll mit einfachen technischen Mitteln ermöglicht werden, die selbst, aufgrund ihrer nicht so komplexen Schaltkreisstruktur, wenig fehleranfällig und außerdem preisgünstig sind.

Gelöst wird diese Aufgabe der Erfindung durch ein Verfahren mit den im Anspruch 1 angegebenen Merkmalen und durch eine Einrichtung mit Merkmalen, die in dem Anspruch 5 angegeben sind.

Vorteilhafte Ausgestaltungen und Weiterbildungen des Gegenstandes der Erfindung sind den übrigen Ansprüchen zu entnehmen.

Durch die Erfindung wird somit der Vorteil erzielt, daß Operationssteuerwerke von elektronischen Datenverarbeitungsanlagen trotz einfacher Mittel sehr umfassend geprüft werden können, da, aufgrund des Prüfens der Zeitbezogenheit der Operationssteuersignale auch der gesamte Zeittakterzeugungs- und -verteilungskomplex der Anlage, jedenfalls soweit er Zeitsteuersignale liefert, die mit Operationssteuersignalen verknüpft sind, mitgeprüft wird. Außerdem werden die Übertragungsstrecken, längs der die Operationssteuersignale zu den in der Maschine verteilten Elementen des Datenflusses übertragen werden, mitgeprüft.

Im folgenden wird ein Ausführungsbeispiel der Erfindung an Hand der beiliegenden Figuren beschrieben. Es zeigen :

Figur 1 ein Blockschaltbild des Steuerteiles einer elektronischen Datenverarbeitungsanlage mit angeschlossener Prüfeinrichtung,

Figur 2 ein detailliertes Blockschaltbild eines Teiles einer Operationssteuereinheit in einer elektronischen Datenverarbeitungsanlage und der Prüfeinrichtung,

Figur 3 ein Impuls-/Zeitdiagramm zur Erläuterung der Betriebsabläufe in der Prüfeinrichtung und

Figur 4 eine schematische Darstellung des Mechanismus, wie die Prüfeinrichtung Zwischenprüfwerte in den einzelnen Zeitabschnitten zu dem endgültigen Prüfwert akkumuliert.

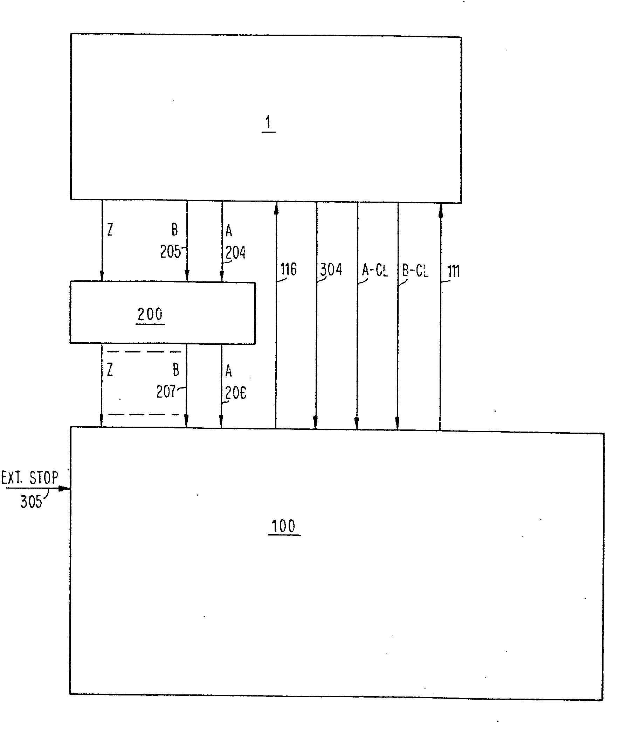

Fig. 1 zeigt zunächst einen Teil einer elektronischen Datenverarbeitungsanlage, der aus einer Instruktionssteuereinheit 1 besteht, die Steuersignale A bis Z zur Steuerung des Datenflusses dieser Anlage erzeugt. Dieser Datenfluß ist in Fig. 1 konzentriert als Datenflußkomplex 200 dargestellt, der in Wirklichkeit aber aus Torschaltungen besteht, die über die gesamte Maschine verstreut sind und die Aufgabe haben, den Instruktions- und Datentransport in der Maschine zu steuern. Diese Tore werden von den genannten Steuersignalen A bis Z gesteuert, d.h. für eine Übertragung geöffnet oder geschlossen.

Für eine effektive Überprüfung dieser Steuersignale auf korrektes Vorliegen kommt es wesentlich darauf an, sie möglichst nahe am Orte ihres Wirksamwerdens für eine Überprüfung abzugreifen. Wie Fig. 1 zeigt, werden diese Steuersignale, beispielsweise A und B, über Leitungen 206, 207 abgefühlt, die von der Datenflußeinheit direkt zur Prüfeinrichtung 100 herangeführt sind.

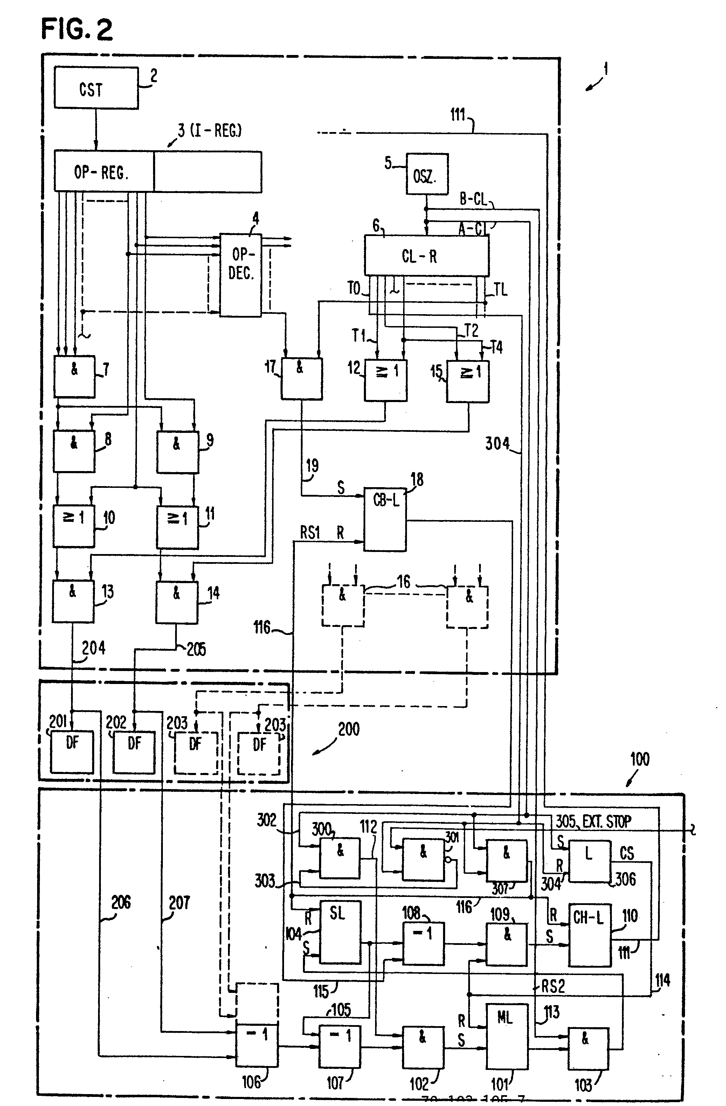

Die übrigen in Fig. 1 dargestellten Steuerleitungen 111, 116, 304, A-CL und B-CL werden im Zusammenhang mit Fig. 2 noch ausführlich erläutert.

Die Instruktionssteuereinheit 1 enthält, wie Fig. 2 zeigt, einen Steuerspeicher (CST) 2, in dem die Instruktionen, z.B. Mikroinstruktionen, gespeichert sind. Mit jedem Lesezyklus des Steuerspeichers gelangt eine Instruktion in das Instruktionsregister (I-REG) 3. Für die Erzeugung der Steuersignale A bis Z kann entweder der Operationscodeteil der Mikroinstruktion, der sich im Operationsregister (OP-REG) befindet, decodiert werden oder es können auch die Bits des Operationscodes direkt genommen werden, nach einer geeigneten Kombination mit den Zeitsteuersignalen (TO bis TL) des Instruktionzyklus verknüpft werden, um die genannten Steuersignale zu bilden. Zur Decodierung der Bits des Operationscodes ist im allgemeinen ein Operationsdecodierer (OP-DEC) 4 vorgesehen. Im übrigen ist es auch möglich, die Operationssteuersignale A bis Z aus einer gemischten Operationsweise zu erzeugen, bei der ein Teil der Bits des Operationscodes direkt, ein anderer nach Decodierung durch den Operationsdecodierer, gemeinsam mit den Taktsignalen des Befehlszyklusses kombiniert werden.

Bei dem Ausführungsbeispiel nach Fig. 2 wird aus bestimmten Bits des Operationscodes von dem Operationsdecodierer 4 ein Prüfbit erzeugt, das aufgrund des inhärenten Bildungsgesetzes Aufschluß darüber gibt, ob die am Zielort zu bestimmten Instruktions-Zykluszeiten der jeweiligen Instruktion vorliegenden Steuersignale A bis Z, gemessen über eine ganze Instruktion, hinsichtlich ihres Auftretens überhaupt und hinsichtlich ihres zeitgerechten Auftretens in den richtigen Zykluszeiten TO bis TL im besonderen korrekt waren. Dieses Prüfbit wird von der Instruktionssteuereinheit 1 über eine Leitung 115 zu der Prüfeinrichtung 100 übertragen und dort mit einem Prüfbit verglichen, das aus den genannten Steuer- und Taktsignalen nach dem gleichen Bildungsgesetz erzeugt wurde, wie das, einen ordnungsgemäßen Betrieb voraussetzende Prüfbit, das jeder Instruktion inhärent ist. Es sei an dieser Stelle erwähnt, daß für dieses Prüfbit im Instruktionsformat eine Bitposition reserviert sein kann oder aber daß es aus den Bits des Operationscodes abgeleitet wird. Die letztere Möglichkeit ist deshalb gegeben, weil der Operationscode eine Instruktion eindeutig kennzeichnet.

Details der Prüfeinrichtung 100 sowie der Instruktionssteuereinheit 1, soweit sie für die Erläuterung der Prüfeinrichtung relevant sind, sind in Fig. 2 dargestellt. Bevor auf die Wirkungsweise und den Betriebsablauf der Prüfeinrichtung 100 näher eingegangen wird, sei zunächst erläutert, auf welche Weise die Steuersignale A bis Z in der vorliegenden Instruktionssteuereinheit 1 erzeugt werden. Das UND-Tor 7 verknüpft die ersten drei Bits des Operationscodes, der im Instruktionsregister 3 für die Dauer der Instruktionsinterpretation und -ausführung gespeichert ist. Das Ausgangssignal dieses UND-Tores 7 wird dem Eingang eines weiteren UND-Tores 8 zugeführt, das über einen weiteren Eingang verfügt, der mit einer anderen Bitstelle des Operationscodes verbunden ist. Auch dem UND-Tor 9 wird das Ausgangssignal des UND-Tores 7 zugeführt sowie ein weiteres Bit aus einer bestimmten Position des Operationscodes.

Wie Fig. 2 zeigt, folgt dann noch eine weitere Ebene einer logischen Verknüpfung mittels der ODER-Tore 10 und 11, bevor die eigentliche Verknüpfung der Datenfluß-Steuersignale mit den Instruktions-Zykluszeiten TO bis TL des Ringzählers (CLR) 6 vorgenommen wird. Diese Verknüpfung mit den Instruktions-Zykluszeiten erfolgt über die UND-Tore 13 und 14 sowie 16. Die UND-Tore 16 sind gestrichelt dargestellt, da sie nicht im einzelnen erläutert werden, ihre Funktion aber für die Erzeugung der Steuersignale C bis Z ohne weiteres aus der ausführlichen Erläuterung der Erzeugung der Steuersignale A und B hervorgeht. Dieses gilt sinngemäß auch für die Erweiterung des Exklusiv-ODER-Tores 106, das im Zusammenhang mit der Prüfeinrichtung 100 noch ausführlich erläutert werden wird.

Das Steuersignal A ergibt sich als Ausgangssignal des UND-Tores 13, wenn das zuvor schon erläuterte Ausgangssignal des ODER-Tores 10 mit der Instruktionszykluszeit T1 oder T4 koinzidiert. In ähnlicher Weise wird auch das Steuersignal B von dem UND-Tor 14 erzeugt, wenn nämlich das Ausgangssignal des bereits erwähnten ODER-Tores 11 mit der Instruktionszykluszeit T2 oder T4 zusammenfällt. Die ODER-Verknüpfung der genannten Instruktionszykluszeiten wird in den ODER-Toren 12 bzw. 15 vorgenommen.

Wie Fig. 2 ferner zu entnehmen ist, steuert das Steuersignal A in der konzentriert dargestellten Datenflußsteuerung 200 die Teildatenflußsteuerung (DF) 201. Zu diesem Zwecke wird das Steuersignal A über die Leitung 204 zur Teildatenflußsteuerung 201 übertragen. Am Eingang dieser Teildatenflußsteuerung 201, also unmittelbar am Orte des Wirksamwerdens des Steuersignals A verzweigt sich die Steuerleitung 204 in eine Prüfleitung 206, die von der Datenflußsteuerung 200 zur Prüfeinrichtung 100 führt.

In der gleichen Weise wird auch das Steuersignal B über die Steuerleitung 205 zu dem Teildatenfluß 202 übertragen. Auch diese Steuerleitung 205 hat dicht am Eingang der Teildatenflußsteuerung 202 als Abgriff eine Prüfleitung 207, die ebenfalls von der Datenflußsteuerung zur Prüfeinrichtung 100 führt.

Ebenso wird mit den übrigen Steuersignalen C bis Z verfahren, die ebenfalls unmittelbar vom Eingang ihrer jeweiligen Teildatenflußsteuerung 203 zur Prüfeinrichtung 100 übertragen werden.

Die Prüfleitungen, z.B. 206, 207, sind in der Prüfeinrichtung 100 mit den Eingängen eines Exklusiv-ODER-Tores 106 verbunden, welches die anliegenden Steuersignale A bis Z miteinander gemäß einer Exklusiv-ODER-Funktion verknüpft. Das Ergebnis dieser Verknüpfung gelangt zu einem weiteren Exklusiv-ODER-Tor 107, wo es mit dem über eine Leitung 105 übertragenen Ausgangssignal einer Master-/Slave-Verriegelungsschaltung verknüpft wird. Diese Master-/Slave-Verriegelungsschaltung besteht aus einem UND-Tor 102, einem Master-Flip-Flop 101, einem weiteren UND-Tor 103 sowie aus einem Slave-Flip-Flop 104.

Das Ausgangssignal des Exklusiv-ODER-Tores 107 gelangt mittels eines Impulses des A-Taktes, der über die Taktleitung A-Cl an das UND-Tor 102 angelegt wird, über das UND-Tor 102 zu dem Einstelleingang S des Master-Flip-Flops 101, wo es solange gespeichert wird, bis es mittels eines Impulses des B-Taktes auf der Taktleitung B-Cl über das UND-Tor 103 in den Slave-Flip-Flop 104 übertragen und dort gespeichert wird. Die Übertragung vom UND-Tor 103 zum Slave-Flip-Flop erfolgt wieder über dessen Einstelleingang S.

Das Exklusiv-ODER-Tor 108, das dem Slave-Flip-Flop 104 nachgeschaltet ist, hat die Aufgabe, den akkumulierten Wert über alle zu überwachenden Steuersignale A bis Z, der sich am Ende einer Instruktion ergibt, mit dem für diese Instruktion charakteristischen Prüfwert CB zu vergleichen. Hierzu ist eine Verriegelungsschaltung (CB-L) 18 vorgesehen, die über das UND-Tor 17 zur letzten Zykluszeit TL dieser Instruktion diesen charakteristischen Prüfwert CB aus dem Operationsdecodierer 4 übernimmt.

Stellt sich bei dem Vergleich in dem Exklusiv-ODER-Tor 108 eine Abweichung heraus, die einem Fehler entspricht, dann wird dieses Fehlersignal über das UND-Tor 109 mittels des Steuersignals CS in die Prüf-Verriegelungsschaltung (CH-L) 110 übernommen und an deren Ausgang 111 für die Einleitung geeigneter Fehlerdiagnose- und/oder Beseitigungsoperationen bereitgestellt.

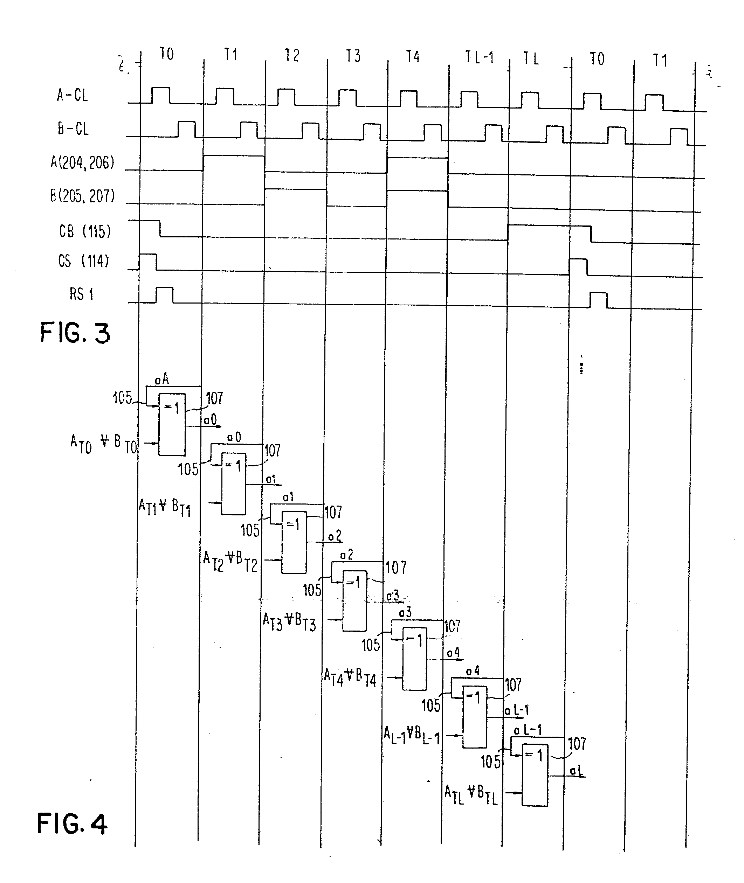

Nachdem zuvor in groben Zügen die Wirkungsweise der Prüfeinrichtung und deren Zusammenhang mit der Operationssteuerung einer Datenverarbeitungsanlage erläutert wurde, wird im folgenden der Betriebsablauf der Prüfeinrichtung 100 ausführlicher und im Zusammenhang mit dem Impuls-Zeitdiagramm nach Fig. 3 dargestellt.

In Fig. 3 sind spaltenweise geordnet die einzelnen Zykluszeiten einer Instruktion, die sog. Instruktionszykluszeiten, dargestellt (1. Zeile). Eine Instruktion beginnt mit der Zykluszeit TO, zu deren Beginn die Instruktion aus dem Steuerspeicher 2 (vgl. Fig. 2) in das Instruktionsregister 3 übernommen und z.B. der Operationscode im Operationsdecodierer 4 decodiert wird. Eine Instruktion endet mit der Instruktionszykluszeit TL, an deren Ende das Ergebnis der Instruktion in Registern, Speichern oder sonstigen Informationsabnehmern zur Verfügung steht. Der Tatsache, daß die Instruktionen unterschiedlich lang sind, d.h. daß sie über unterschiedlich viele Instruktionszykluszeiten verfügen, wird dadurch Rechnung getragen, daß die jeweils letzte Instruktionszykluszeit einer Instruktion, wie lange die Instruktion auch immer sei, mit TL und deren vorletzte Instruktionszykluszeit mit TL-1 usw. benannt ist.

In jede Instruktionszykluszeit fallen auch zwei Taktimpulse, und zwar einer des A-Taktes (A-CL) und einer des B-Taktes (B-CL), die von dem Oszillator (OSC) 5 erzeugt werden und in den Zeilen 2 und 3 in Fig. 3 dargestellt sind.

Außerdem sind in den Zeilen 4 und 5 (jeweils von oben gezählt) die Steuersignale A und B dargestellt, die über die Leitungen 204, 206 bzw. 205, 207 übertragen werden. Wie aus Fig. 3 zu entnehmen ist, sind die Steuersignale mit bestimmten Instruktionszykluszeiten kombiniert, das Steuersignal A beispielsweise mit den Instruktionzykluszeiten T1 und T4, das Steuersignal B beispielsweise mit den Instruktionszykluszeiten T2 und T4.

Da eine Instruktion, wie zuvor schon erwähnt wurde, mit dem Beginn der ersten Instruktionszykluszeit TO beginnt und mit dem Ende der letzten Instruktionszykluszeit TL endet, müssen die Steuersignale A bis Z, die zur Ausführung einer Instruktion benötigt werden, während dieser Zeit zur Verfügung gestellt werden. Ein Steuersignal, das diesen Vorgang steuern könnte, ist beispielsweise das Steuersignal CS, das in Fig. 3 in der zweiten Zeile von unten dargestellt ist. Dieses Signal kann dazu dienen, die Instruktion aus dem Steuerspeicher (CST) 2 in das Instruktionsregister (I-REG) 3 zu übertragen, wobei auch der Operationscode in den Operationsregisterteil dieses Registers 3 gelangt (in Fig. 2 ist diese Übertragung nicht dargestellt).

In der Prüfeinrichtung 100 hat das Eingangs-Exklusiv-ODER-Tor (XOR) 106 die bereits erwähnte Aufgabe, die Exklusiv-ODER-Verknüpfung der Steuersignale A bis Z vorzunehmen. Fig. 4 zeigt, daß die Exklusiv-ODER-Verknüpfung, beispielsweise der Steuersignale A und B, so wie sie zur ersten Instruktionszykluszeit TO vorliegen, (gekennzeichnet durch den Index der Zykluszeit TO) in dem nachgeschalteten Exklusiv-ODER-Tor 107 mit dem Ausgangssignal des Slave-Flip-Flops 104, das zuvor von dem Rückstellsignal RS1 (vgl. Fig. 3, letzte Zeile) auf einen frei wählbaren Anfangswert aA zurückgestellt wurde, verknüpft wird. Das Ausgangssignal aO dieser Exklusiv-ODER-Verknüpfung wird über das UND-Tor 102 während der Instruktionszykluszeit TO mit Hilfe eines Impulses des A-Taktes, der vom Oszillator 5, über die Leitungen A-CL und 302, das UND-Tor 300 und die Leitung 112 zu dem UND-Tor 102 übertragen wird, in den Master-Flip-Flop 101 eingegeben, von dort während der gleichen Instruktionszykluszeit TO über das UND-Tor 103 mittels eines Impulses des B-Taktes, der über die Leitung 113 an das genannte UND-Tor angelegt wird, über den Setzeingang S in den Slave-Flip-Flop 104 übertragen und hier bis zur nächsten, in diesem Fall bis zur zweiten Instruktionszykluszeit T1 zwischengespeichert.

Zur Instruktionszykluszeit T1 wird dann in einer analogen Weise, wie Fig. 4 zeigt, die Exklusiv-ODER-Verknüpfung der Steuersignale $A_{T1}$ und $B_{T1}$, wie sie zu Beginn der Instruktionszykluszeit T1 vorliegen, mit dem Signal aO in dem Exklusiv-ODER-Tor 107 verknüpft, das als Verknüpfungsergebnis das Signal a1 an seinem Ausgang bereitstellt. Dieses Signal wird, wie zuvor das Signal aO über das UND-Tor 102, den Master-Flip-Flop 101 und das UND-Tor 103 zu dem Slave-Flip-Flop 104 weitergeleitet, wo es wieder für die Dauer einer Instruktionszykluszeit zwischengespeichert und über die Leitung 105 zu dem Eingang des Exklusiv-ODER-Tores 107 übertragen wird. Zu Beginn der dritten Instruktionszykluszeit T2 liegt am anderen Eingang des Exklusiv-ODER-Tores 107 die Exklusiv-ODER-Verknüpfung der Steuersignale $A_{T2}$ und $B_{T2}$ an, die dieses Exklusiv-ODER-Tor zu dem Ausgangssignal a2 verknüpft.

Mit den Steuersignalen $A_{Ti}$ und $B_{Ti}$ in den übrigen Instruktionszykluszeiten T3 bis TL und den aus jeweiligen Verknüpfungen sich ergebenden Signalen a3 bis AL wird ebenfalls in der zuvor erläuterten Weise verfahren. Am Ende der letzten Instruktionszykluszeit TL einer Instruktion steht somit das zuletzt gebildete und durch Akkumulation über alle Instruktionszykluszeiten entstandene Verknüpfungssignal aL zur Verfügung, das einen charakteristischen Kennwert für die überprüften instruktionszykluszeitabhängigen Steuersignale, im Beispiel der Fig. 4 der Steuersignale A und B, darstellt.

Dieses zuletzt gebildete Verknüpfungssignal aL steht am Ausgang des Slave-Flip-Flops 104 zur letzten Instruktionszykluszeit TL mit dem Erscheinen des Impulses des B-Taktes zur Verfügung und kann nun in dem Exklusiv-ODER-Tor 108 mit dem über die Leitung 115 übertragenen Prüfbit CB, das für die soeben überprüfte Instruktion charakteristich ist, verglichen werden. Dieses Prüfbit wird in irgendeiner Weise aus den Bits des Operationscodes der Instruktion gewonnen und steht auch zur Instruktionszykluszeit TL im Operationsregister zur Übernahme bereit. So kann beispielsweise der Operationsdecodierer 4 dazu verwendet werden, das für diese Instruktion charakteristische Prüfbit aus einem Teil der Operationscodebits zu erzeugen. Dieses Prüfbit wird zur Instruktionszykluszeit TL über ein UND-Tor 17 und dessen Ausgangsleitung 19 über den Einstelleingang S in eine Verriegelungsschaltung (CB-L) 18 eingegeben und bis zur Übernahme in die Prüf-Verriegelungsschaltung 110 dort zwischengespeichert. Die Rückstellung dieser Verriegelungsschaltung 18 erfolgt rechtzeitig vor Übernahme des Prüfbits der nächsten Instruktion durch einen Rückstellimpuls RS1, der in der untersten Zeile in Fig. 3 dargestellt ist.

Das von dem Exklusiv-ODER-Tor 108 erzeugte Vergleichssignal wird mit Hilfe des Steuersignals CS über das UND-Tor 109 zur Einstellung einer Prüf-Verriegelungsschaltung (CH-L) 110 übertragen. Das Ausgangssignal des Exklusiv-ODER-Tores 108, in dem der Vergleich vorgenommen wird, ist dann als Fehler zu interpretieren, wenn es einer binären Eins entspricht. Dieses Fehlersignal steht dann solange am Ausgang 111 zur Verfügung, bis die Prüf-Verriegelungsschaltung 110 über ein Rückstellsignal RS2 an seinem Rückstelleingang wieder zurückgestellt wird.

Für die Durchführung des Vergleichs des akkumulierten Verknüpfungssignals, beispielsweise aL, mit dem Prüfbit CB der jeweiligen Instruktion ist es ausreichend, dieses Prüfbit aus der Verriegelungsschaltung 18 mit dem Beginn der Instruktionszykluszeit TL bereitzustellen, da dieser Vergleich erst durchgeführt werden kann, wenn das akkumulierte Verknüpfungssignal aL zur Instruktionszykluszeit TL und zur Zeit des in diese Zykluszeit fallenden Impulses des B-Taktes am Ausgang des Slave-Flip-Flops 104 bereitsteht. Da das akkumulierte Prüfsignal aL am Ausgang des Exklusiv-ODER-Tores 108 durch das Signal CS zu Beginn der Instruktionszykluszeit TO der nächsten Instruktion in die Fehler-Verriegelungsschaltung 110 übertragen wird, kann die Fehler-Verriegelungsschaltung 110 übertragen wird, kann die Prüfbit-Verriegelungsschaltung 18 mit dem Rückstellsignal RS1 über die Leitung 116 ebenso zurückgestellt werden, wie der Slave-Flip-Flop 104. Das Rückstellsignal RS1 wird, wie Fig. 2 zeigt, von einem UND-Tor 307 erzeugt, an dessen einem Eingang das Signal der Instruktionszykluszeit TO und an deren anderem Eingang die Impulse des A-Taktes (A-CL) anliegen. Das Rückstellsignal RS1 ist das Ausgangssignal dieses UND-Tores 307 und wird über die Leitung 116 sowohl zu dem Rückstelleingang des Slave-Flip-Flops 104 als auch der Prüfbit-Verriegelungsschaltung 18 übertragen.

Der Master-Flip-Flop 101 darf allerdings nicht von diesem Rückstellsignal RS1 zurückgestellt werden, da zu dessen Erscheinungszeit bereits die mit einem Impuls des A-Taktes eintreffenden Steuersignale für die nächste Instruktion übernommen werden. Der Master-Flip-Flop 101 muß also früher zurückgestellt werden. Dieses geschieht, wie bereits erwähnt wurde, mit dem Signal CS. Es ist jedoch darauf zu achten, daß das Rückstellsignal RS1 den Slave-Flip-Flop 104 so rechtzeitig zurückstellt, daß seine binäre Null am Ausgang schon wieder mit den neuen Steuersignalen im Exklusiv-ODER-Tor 107 verknüpft werden kann.

Damit die bei einem extern bedingten Maschinenstop bis zu diesem Zeitpunkt akkumulierten Verknüpfungssignale in der Prüfschaltung 100 nicht an einer beliebigen Stelle in einem Instruktionszyklus gestört werden können, wird die aus einem UND-Tor 300 und einem NAND-Tor 301 gebildete Steuerschaltung vorgesehen, die einen Stop immer erst dann möglich macht, wenn die Verknüpfungssignale vollständig für diejenige Instruktion akkumuliert sind, in deren Ausführung ein solcher externer Stop fällt. Das externe Stopsignal, das über die Leitung 305 zu dem Eingang der NAND-Schaltung 301 führt, wird mit der Instruktionszykluszeit TO, die über die Leitung 304 zu dem anderen Eingang dieser NAND-Schaltung geführt wird, verknüpft. Mit Hilfe des UND-Tores 300 ist somit die NAND-Schaltung 301 in der Lage, bei extern auftretenden Stops die Übertragung der Impulse des A-Taktes zu dem UND-Tor 102 zu unterbinden, dessen Aufgabe darin besteht, Verknüpfungssignale des Exklusiv-ODER-Tores 107 zu dem Master-Flip-Flop 101 zu übertragen. Auf diese Weise kann die Akkumulierung der Verknüpfungssignale erst am Ende der laufenden Instruktion unterbrochen werden, zu einem Zeitpunkt also, zu dem diese Akkumulation vollständig abgeschlossen und noch der Fehlervergleich mit dem Prüfbit durchgeführt werden kann.

**Ansprüche**

1. Verfahren für eine elektronische Datenverarbeitungsanlage zur Prüfung der aus einer Instruktion abgeleiteten Steuersignale, bei dem aus diesen Steuersignalen, die zusammen mit Zeittaktsignalen gemäß einer logischen Funktion miteinander verknüpft werden, ein Prüfwert gebildet und dieser mit einem der Instruktion zugeordneten Soll-Prüfwert, der korrekte Steuersignale kennzeichnet, verglichen und bei Nichtübereinstimmung von Prüfwert und Soll-Prüfwert ein Fehlersignal erzeugt wird, gekennzeichnet durch folgende Verfahrensschritte :

a) Zur Prüfung des zykluszeitgerechten Auftretens der mit den Zykluszeiten (TO bis TL) einer Instruktion verknüpften Steuersignale ($A_{Ti}$ bis $Z_{Ti}$) werden im Anfangsschritt (i = 0) Steuersignale ($A_{TO}$ bis $Z_{TO}$) und ein frei wählbares rückgeführtes Anfangsverknüpfungssignal (aA) in einer logischen Schaltung (107) gemäß einer frei wählbaren logischen Funktion (f) zu einem Verknüpfungssignal (aO) miteinander verknüpft ;

b) In der gleichen Zykluszeit (TO) wird zu einer ersten Taktzeit (A-Takt) das Verknüpfungssignal (aO) in einem ersten Speicherelement (101) zwischengespeichert ;

c) In der gleichen Zykluszeit (TO) wird zu einer zweiten Taktzeit (B-Takt) das Verknüpfungssignal (aO) von dem ersten Speicherelement zu einem zweiten Speicherelement (104) übertragen und von dort auf den Eingang der logischen Schaltung zurückgeführt ;

d) In der jeweils nächsten bis zur vorletzten Zykluszeit (T1 bis TL-1) werden die jeweils näch-sten Steuersignale ($A_{T1}$ bis $Z_{T1}$, ... $A_{TL-1}$ bis $Z_{TL-1}$) und das in der jeweils vorhergehenden Zykluszeit im Gültigkeitsbereich von der ersten (TO) bis zur vorvorletzten Zykluszeit (TL-2) einer logischen Instruktion gebildete und auf den Eingang der logischen Schaltung zurückgeführte Verknüpfungssignal im Gültigkeitsbereich vom ersten (aO) bis zum vorvorletzten (aL-2) Verknüpfungssignal gemäß der logischen Funktion (f) jeweils zu einem Verknüpfungssignal (a1 bis aL-1) miteinander verknüpft ;

e) In der jeweils nächsten bis zur vorletzten Zykluszeit zeit (T1 bis TL-1) werden jeweils zur ersten Taktzeit die jeweils nächsten Verknüpfungssignale (a1 bis aL-1) im ersten Speichere-ment zwischengespeichert ;

f) In der jeweils nächsten bis zur vorletzten Zykluszeit (T1 bis TL-1) werden jeweils zur zweiten Taktzeit die jeweils nächsten Verknüpfungssignale (a1 bis aL-1) von dem ersten Speichere-ment zu dem zweiten übertragen und von dort auf den Eingang der logischen Schaltung zurückgeführt ;

g) In der letzten Zykluszeit (TL) einer Instruktion werden zur ersten Taktzeit die letzten Steuersignale ($A_{TL}$ bis $Z_{TL}$) und das in der vorletzten Zykluszeit (TL-1) gebildete und auf den Eingang der logischen Schaltung zurückgeführte Verknüpfungssignal (aL-1) gemäß der logischen Funktion (f) zu dem Prüfsignal (aL) miteinander verknüpft ;

h) In der letzten Zykluszeit (TL) wird zur ersten Taktzeit das Prüfsignal im ersten Speicherelement zwischengespeichert ;

i) In der letzten Zykluszeit (TL) wird zur zweiten Taktzeit das Prüfsignal (aL) im zweiten Speicherelement zwischengespeichert ;

j) Danach werden ein Vergleich des Soll-Prüfsignals (CB) mit dem Prüfsignal (aL) durchgeführt, das evtl. aus einer Ungleichheit resultierende Fehlersignal gespeichert und die Speicherelemente (101, 104) zurückgestellt.

2. Verfahren nach Anspruch 1, dadurch gekennzeichnet, daß der Prüfwert (aL) gemäß folgender Beziehung gebildet wird :

$$a_L = f\ [A_{TL},\ B_{TL}\ ...\ Z_{TL},\ f\,(A_{TL\text{-}1},\ B_{TL\text{-}1}\ ...\ Z_{TL\text{-}1},$$

$$f\ \{A_{TL\text{-}2}\ ...\ f < A_{TO},\ B_{TO}\ ...\ Z_{TO},\ f_{Anf} > \})]$$

wobei f eine eindeutige Bool'sche Funktion der Steuersignale (A bis Z) zu den verschiedenen Zykluszeiten (TO bis TL) einer Instruktion und $f_{Anf}$ diejenige eines frei wählbaren Anfangswertes (aA) sind.

3. Verfahren nach Anspruch 2, dadurch gekennzeichnet, daß die Bool'sche Funktion (f) die Exklusiv-ODER-Funktion ist,

4. Verfahren nach Anspruch 2, dadurch gekennzeichnet, daß die Bool'sche Funktion (f) die binäre Additionsfunktion ist.

5. Einrichtung in einer elektronischen Datenverarbeitungsanlage zur Prüfung der aus einer Instruktion abgeleiteten Steuersignale, die aus diesen Steuersignalen, die zusammen mit Zeittaktsignalen gemäß einer logischen Funktion miteinander verknüpft werden, einen Prüfwert bildet und diesen mit einem der Instruktion zugeordneten Soll-Prüfwert, der korrekte Steuersignale kennzeichnet, vergleicht und Nichtübereinstimmung der Prüfwerte ein Fehlersignal erzeugt, zur Durchführung der Verfahrens nach einem oder mehreren der Ansprüche 1 bis 4, gekennzeichnet durch :

— eine logische Schaltung (107 ; Fig. 2) zur Ausführung einer frei wählbaren Bool' schen Funktion (f) zwecks Erzeugung eines Verknüpfungssignales (ai) aus den zykluszeitabhängigen Steuersignalen ($A_{Ti}$ bis $Z_{Ti}$) einer Instruktion und eines von einem zweiten Speicherelement (104) abgegebenen Verknüpfungssignales (aA bis aL-1),

— eine erste Torschaltung (102) zur Übertragung des jeweiligen Verknüpfungssignals (ai) zu einer ersten Taktzeit (A-Takt) in jeder Zykluszeit (TO bis TL) einer Instruktion,

— ein erstes Speicherelement (101) zum Empfang des Verknüpfungssignals von der ersten Torschaltung und zu dessen Zwischenspeicherung,

— eine zweite Torschaltung (103) zur Übertragung des vom ersten Speicherelement empfangenen Verknüpfungssignals zu einer zweiten Taktzeit (B-Takt) in der gleichen Zykluszeit,

— ein zweites Speicherelement (104) zum Empfang des Verknüpfungssignals von der zweiten Torschaltung und zu dessen Zwischenspeicherung und Rückführung zur logischen Schaltung (107),

— eine Vergleichsschaltung (108) zum Vergleich des Prüfwertes [letztes Verknüpfungssignal (aL) einer Instruktion] mit dem Soll-Prüfwert der Instruktion,

— eine erste Steuerschaltung (306), die ein erstes Signal (CS) erzeugt, das den Inhalt des ersten Speicherelements zu Beginn der ersten Zykluszeit einer neuen Instruktion löscht und die Übertragung eines evtl. Fehlersignals in ein drittes Speicherelement (110) vornimmt und schließlich,

— eine zweite Steuerschaltung (307), die ein zweites Signal (RS1) erzeugt, das den Inhalt des zweiten Speicherelementes und eines Speichers (18) für den Soll-Prüfwert der laufenden Instruktion löscht und die Übernahme des Soll-Prüfwertes für die nächste Instruktion vorbereitet.

6. Einrichtung nach Anspruch 5, dadurch gekennzeichnet, daß die Steuersignale (A bis Z ; Fig. 2) unmittelbar vor dem Ort (201, 202) ihres Wirksamwerdens mittels Prüfleitungen (206, 207) abgegriffen und zum Eingang der Prüfeinrichtung (100) übertragen werden.

**Claims**

1. Method for an electronic data processing system for checking the control signals derived from an instruction, wherein a check value is formed from these control signals which are combined with time clock signals according to a logic function, and this check value is compared with a desired check value associated with the instruction and denoting correct control signals, and wherein, in the event of a mismatch of the check value and the desired check value, an error signal is generated, characterized by the following method steps :

a) for checking whether the control signals ($A_{Ti}$ to $Z_{Ti}$) associated with the cycle times (TO to TL) of an instruction occur at the proper times, control signals ($A_{TO}$ to $Z_{TO}$) and an arbitrarily selectable fed back initial logic signal (aA) are combined according to an arbitrarily selectable logic function (f) in a logic circuit (107) in an initial step ($i = 0$), forming a logic signal (aO) ;

b) during the same cycle time (TO), the logic signal (aO) is temporarily stored in a first storage element (101) at a first clock time (A-clock) ;

c) during the same cycle time (TO), the logic signal (aO) is transferred at a second clock time (B-clock) from the first storage element to a second storage element (104), whence it is fed back to the input of the logic circuit ;

d) during the respective subsequent cycle times up to the penultimate cycle time (T1 to TL-1), the respective subsequent control signals ($A_{T1}$ to $Z_{T1}$, ... $A_{TL\text{-}1}$ to $Z_{TL\text{-}1}$) and the logic signal, formed in the respective preceding cycle time within the validity slot of the first cycle time (TO) to the antepenultimate cycle time (TL-2) of a logic instruction and fed back to the input of the logic circuit, are combined with each other according to the logic function (f) within the validity slot of the first (aO) to the penultimate (aL-2) logic signal, forming a logic signal (a1 to aL-1) ;

e) during the respective subsequent cycle time up to the penultimate cycle time (T1 to TL-1), the respective subsequent signals (a1 to aL-1) are temporarily stored in the first storage element at the respective first clock time ;

f) during the respective subsequent cycle time up to the penultimate cycle time (T1 to TL-1), the respective subsequent logic signals (a1 to aL-1) are transferred at the respective second clock time from the first storage element to the second storage element, whence they are fed back to the input of the logic circuit ;

g) during the last cycle time (TL) of an instruction, the last control signals ($A_{TL}$ to $Z_{TL}$) and the logic signal (aL-1), formed in the penultimate cycle time (TL-1) and fed back to the input of the logic circuit, are combined with each other according to the logic function (f), forming the check signal (aL) ;

h) during the last cycle time (TL), the check signal is temporarily stored in the first storage element at the first clock time ;

i) during the last cycle time (TL), the check signal (aL) is stored in the second storage element at the second cycle time ;

j) subsequently, the desired check signal (CB) is compared with the check signal (aL), the error signal, if any, resulting from a mismatch is stored, and the storage elements (101, 104) are reset.

2. Method according to claim 1, characterized in that the check value (aL) is formed according to the following relation :

$$aL = f \; [A_{TL}, \; B_{TL} \; ... \; Z_{TL}, \; f \, (A_{TL\text{-}1}, \; B_{TL\text{-}1} \; ... \; Z_{TL\text{-}1},$$

$$f \, \{A_{TL\text{-}2} \; ... \; f < A_{TO}, \; B_{TO} \; ... \; Z_{TO}, \; f_{Anf} > \}) ]$$

where f is a unique Boolean function of the control signals A to Z) at the different cycle times (TO to TL) of an instruction and $f_{Anf}$ is the unique Boolean function of an abritrarily selectable initial value (aA).

3. Method according to claim 2, characterized in that the Boolean function (f) is the exclusive-OR function.

4. Method according to claim 2, characterized in that the Boolean function (f) is the binary addition function.

5. Device in an electronic data processing system, for checking the control signals derived from an instruction, which forms a check value from the control signals, that are combined with clock signals according to a logic function, and compares the check value with a desired check value associated with the instruction and denoting correct control signals, and which, in the event of a mismatch of the check values, generates an error signal, for implementing the method according to any one or several of the claims 1 to 4, characterized by :

— a logic circuit (107 ; Fig. 2) for executing an abritrarily selectable Boolean function (f) for generating a logic signal (ai) from the cycle time dependent control signals ($A_{Ti}$ to $Z_{Ti}$) of an instruction and a logic signal (aA to aL-1) emitted by a second storage element (104).

— a first gate circuit (102) for transferring the respective logic signal (ai) at a first clock time (A-clock) during each cycle time (TO to TL) of an instruction,

— a first storage element (101) for receiving the logic signal from the first gate circuit and for its temporary storage,

— a second gate circuit (103) for transferring at a second clock time (B-clock) during the same cycle time the logic signal received from the first storage element,

— a second storage element (104) for receiving the logic signal from the second gate circuit and for its temporary storage and transfer back to the logic circuit (107),

— a compare circuit (108) for comparing the check value [last logic signal (aL) of an instruction] with the desired check value of the instruction,

— a first control circuit (306) generating a first signal (CS) erasing the contents of the first storage element at the beginning of the first cycle time of a new instruction and causing an error signal, if any, to be transferred to a third storage element (110), and, finally,

— a second control circuit (307) generating a second signal (RS1) erasing the contents of the second storage element and of a storage (18) for the desired check value of the current instruction, and initiating the take-over of the desired check value for the subsequent instruction.

6. Device according to claim 5, characterized in that the control signals (A to Z ; Fig. 2) are tapped by means of check lines (206, 207) at the very points (201, 202) where they become effective and are transferred to the input of the check unit (100).

**Revendications**

1. Procédé dans un système de traitement de données électroniques, pour tester les signaux de commande provenant d'une instruction, dans lequel on forme, à partir de ces signaux de commande combinés avec des signaux de chronologie selon une fonction logique, une valeur de test qui est comparée à une valeur de test nominale associée à l'instruction et indiquant des signaux de commande corrects, un signal d'erreur étant généré si la valeur de test et la valeur de test nominale ne concordent pas ; caractérisé par les étapes suivantes ;

a) pour tester l'apparition, dans le cycle correct, des signaux de commande ($A_{Ti}$ à $Z_{Ti}$) combinés avec les cycles (TO à TL) d'une instruction, on combine à l'étape initiale (i = 0) des signaux de commande ($A_{TO}$ à $Z_{TO}$) et un signal logique initial à réaction (aA), librement choisi, dans un circuit logique (107) selon une fonction logique (f), librement choisie, pour obtenir un signal logique (aO) ;

b) durant le même cycle (TO), on emmagasine le signal logique (aO) dans une première mémoire tampon (101) à un premier temps de chronologie (chronologie A) ;

c) durant le même cycle (TO), on transfère, à un second temps de chronologie (chronologie B), le signal logique (aO) du premier élément de mémoire à un second élément de mémoire (104), d'où il est retourné à l'entrée du circuit logique ;

d) durant le temps allant du cycle suivant jusqu'à l'avant dernier cycle (T1 à TL-1), on combine, selon la fonction logique (f), les signaux de commande suivants ($A_{T1}$ à $Z_{T1}$, ... $A_{TL-1}$ à $Z_{TL-1}$) et le signal logique (dans la zone de validité allant du premier signal logique (aO) jusqu'à celui précédent l'avant dernier signal logique (aL-2) généré durant le cycle précédent (dans la zone de validité allant du premier cycle (TO) jusqu'à celui précédent l'avant dernier cycle (CTL-2) d'une instruction logique) et retourné à l'entrée du circuit logique pour obtenir un signal logique (a1 à aL-1) ;

e) durant le cycle suivant et jusqu'à l'avant dernier cycle (T1 à TL-1), on emmagasine temporairement dans le premier élément de mémoire au premier temps de chronologie les signaux logiques suivants (a1 à aL-1) ;

f) durant le cycle suivant et jusqu'à l'avant dernier cycle (T1 à TL-1), on transfère au second temps de chronologie les signaux logiques suivants (a1 à aL-1) du premier élément de mémoire au second élément de mémoire d'où ils sont retournés à l'entrée du circuit logique ;

g) durant le dernier cycle (TL) d'une instruction, on combine au premier temps de chronologie, selon la fonction logique (f), les derniers signaux de commande ($A_{TL}$ à $Z_{TL}$) et le signal logique (aL-1) formé durant l'avant dernier cycle (TL-1) et retourné à l'entrée du circuit logique pour obtenir le signal de test (aL) ;

h) durant le dernier cycle (TL), on emmagasine au premier temps de chronologie le signal de test dans le premier élément de mémoire ;

i) durant le dernier cycle (TL), on emmagasine temporairement, au second temps de chronologie, le signal de test (aL) dans le second élément de mémoire ;

j) ensuite on compare le signal de test nominal (CB) avec le signal de test (aL), on emmagasine le signal d'erreur provenant éventuellement d'une non concordance et on remet les éléments de mémoire (101, 104) à zéro.

2. Procédé selon la revendication 1, caractérisé en ce que la valeur de test (aL) est obtenue selon la relation suivante :

$$aL = f\ [A_{TL}, B_{TL}, ..., Z_{TL}, f(A_{TL-1}, B_{TL-1}, ..., Z_{TL-1}, f\{A_{TL-2}, ..., f <A_{TO}, B_{TO}, ..., Z_{TO}, f_{Anf}>\})]$$

où f est une fonction de Boole unique des signaux de commande (A à Z) aux différents cycles (TO à TL) d'une instruction $f_{Anf}$ et celle d'une valeur initiale (aA) librement choisie.

3. Procédé selon la revendication 2, caractérisé en ce que la fonction de Boole (f) est la fonction OU Exclusif.

4. Procédé selon la revendication 2, caractérisé en ce que la fonction de Boolet (f) est la fonction d'addition binaire.

5. Dispositif dans un système de traitement de données pour tester les signaux de commande provenant d'une instruction, et qui génère, à partir de ces signaux de commande combinés avec des signaux de chronologie selon une fonction logique, une valeur de test qui est comparée avec une valeur de test nominale associée à une instruction et indiquant des signaux de commande corrects, et qui génère un signal d'erreur en cas de non concordance des valeurs de test ; dispositif permettant d'exécuter le procédé selon l'une ou plusieurs des revendications 1 à 4, caractérisé par :

— un circuit logique (107 ; figure 2) pour exécuter une fonction de Boole (f) librement choisie afin d'obtenir un signal logique (ai) à partir des signaux de commande ($A_{Ti}$ à $Z_{Ti}$) d'une instruction, qui dépendent des cycles et à partir d'un signal logique (aA à aL-1) émis par un second élément de mémoire (104),

— un premier circuit de porte (102) pour transmettre les signaux logiques (ai) à un premier temps de chronologie (chronologie A) durant chaque cycle (TO à TL) d'une instruction,

— un premier élément de mémoire (101) pour recevoir le signal logique du premier circuit de porte et pour emmagasiner celui-ci temporairement,

— un second circuit de porte (103) pour transférer le premier signal logique reçu par le premier élément de mémoire à un second temps de chronologie (chronologie B) durant le même cycle,

— un second élément de mémoire (104) pour recevoir le signal logique du second circuit de porte et pour temporairement emmagasiner celui-ci et le retourner ensuite au circuit logique (107),

— un circuit comparateur (108) pour comparer la valeur de test (dernier signal logique (a1) d'une instruction) avec la valeur de test nominale de l'instruction,

— un premier circuit de commande (306) générant un premier signal (CS) qui efface le contenu du premier élément de mémoire au début du premier cycle d'une nouvelle instruction et qui transfère un signal d'erreur éventuelle dans un troisième élément de mémoire (110), et, enfin,

— un second circuit de commande (307) générant un second signal (RS1) qui efface le contenu du second élément de mémoire et d'une mémoire (18) pour la valeur de test nominale de l'instruction courante et qui prépare la réception de la valeur de test nominale pour l'instruction suivante.

6. Dispositif selon la revendication 5, caractérisé en ce que les signaux de commande (A à Z ; figure 2) sont recueillis par des lignes de test (206, 207) immédiatement avant le lieu (201, 202) où ils deviennent actifs et transférés à l'entrée du dispositif de test (100).

**1**

Z    B    A
205    204

116  304  A-CL  B-CL  111

**200**

Z    B    A
207    206

EXT. STOP
305

**100**

1

**FIG. 2**

0 012 794

**FIG. 3**

**FIG. 4**